# FASCICULE DE BREVET EUROPEEN

(11) **EP 2 209 674 B1**
(45) Date de publication et mention de la délivrance du brevet: **02.08.2017**
(21) Numéro de dépôt: 08852847.6
(22) Date de dépôt: 09.10.2008
(51) Int. Cl.: B60S 1/08

(54) **SYSTEME D'ESSUYAGE A CAPTEURS DE POSITION EXTERNES**
WISCHERSYSTEM MIT EXTERNEN POSITIONSSENSOREN
WIPER SYSTEM WITH EXTERNAL POSITION SENSORS

(30) Priorité: 19.11.2007 FR 0708116
(43) Date de publication de la demande: 28.07.2010
(73) Titulaire: Valeo Systèmes d'Essuyage, 78322 Le Mesnil Saint Denis (FR)
(72) Inventeur: TREBOUET, Marcel, 78450 Chavenay (FR); GRANDJEAN, Denis, F-78660 Ablis (FR)
(86) Numéro de dépôt international: PCT/EP2008/063572
(87) Numéro de publication internationale: WO 2009/065668

(56) Documents cités:
- DE-A1- 4 104 552
- DE-A1- 10 236 887
- DE-A1- 19 653 432
- JP-A- 2002 262 515

## Description

L'invention propose un système d'essuyage comportant une tringlerie et des moyens de détection de la position angulaire d'une manivelle de la tringlerie.

L'invention propose plus particulièrement un système d'essuyage d'un panneau vitré de véhicule automobile qui comporte un motoréducteur d'entraînement, et une manivelle d'une tringlerie de transformation du mouvement de rotation d'un arbre de sortie du motoréducteur en un mouvement de balayage alterné d'un balai d'essuyage, qui est montée sur l'arbre de sortie.

La détection de la position angulaire de la manivelle de la tringlerie, autour de l'axe principal de l'arbre de sortie du motoréducteur, permet de déterminer la position du balai d'essuyage sur le panneau vitré, et ainsi, cela permet d'optimiser la commande de certains composants du système d'essuyage. Par exemple, cela permet de commander le déclenchement du système de projection de liquide de nettoyage en fonction de la position du balai sur le panneau vitré, ou pour commander directement le motoréducteur, par exemple pour modifier les polarités d'alimentation électrique du motoréducteur.

Dans le cas d'un motoréducteur du type dit "électronisé", le motoréducteur comporte un ensemble électronique intégré, qui est mobile simultanément à la rotation de l'arbre de sortie, ce qui permet d'avoir une information relativement fiable de la position angulaire de l'arbre de sortie, et par conséquent, cela permet de connaître la position du balai d'essuyage sur le panneau vitré.

Un motoréducteur qui n'est pas du type électronisé, ne comporte pas de tels composants électroniques, ce qui permet de simplifier sa conception, pour que les coûts de fabrication soient limités.

Cependant, un tel motoréducteur ne comporte pas de moyens pour déterminer une position angulaire intermédiaire de la bielle de la tringlerie. Le document DE 41 04 552 A montre un système d'essuyage selon le préambule de la première revendication. Le document DE 196 53 432 A montre un système d'essuyage ayant des moyens de détection des positions angulaires du balai.

L'invention a pour but de proposer un système d'essuyage comportant un motoréducteur du type non électronisé, et comportant des moyens pour détecter la position angulaire du balai d'essuyage.

Dans ce but, l'invention propose un système d'essuyage tel que décrit précédemment, caractérisé en ce que le système d'essuyage comporte des moyens pour détecter le passage de la manivelle à des positions angulaires prédéfinies autour de l'arbre de sortie, qui est porté par le motoréducteur, et qui est relié à un dispositif de commande d'au moins un composant du système d'essuyage.

Selon d'autres caractéristiques de l'invention, prises isolément ou en combinaison :
- les moyens pour détecter le passage de la manivelle comportent au moins un capteur agencé au niveau d'une position angulaire de la manivelle à détecter.
- ledit au moins un capteur est porté par une platine intermédiaire de montage agencée axialement entre la manivelle et le motoréducteur, le long de l'axe principal de l'arbre de sortie, qui est rapportée sur le motoréducteur.
- ledit au moins un capteur et/ou la platine intermédiaire comporte des moyens de réglage de la position dudit au moins un capteur sur la platine intermédiaire, autour de l'axe principal de l'arbre de sortie.
- la platine intermédiaire comporte une gorge en forme d'un arc de cercle centré sur l'axe principal de l'arbre de sortie, dans laquelle une partie associée du capteur est reçue, pour permettre le réglage de la position dudit au moins un capteur sur la platine intermédiaire.
- ledit au moins un capteur est apte à détecter le passage de la manivelle à une position angulaire autour de l'axe principal de l'arbre de sortie correspondant au début d'un cycle de balayage du balai.
- la platine intermédiaire porte au moins un deuxième capteur qui apte à détecter le passage de la manivelle à une position angulaire correspondant à une position angulaire intermédiaire prédéterminée du balai lors de son mouvement de balayage sur le panneau vitré.
- la manivelle porte un composant apte à coopérer avec ledit au moins un capteur pour le déclenchement dudit capteur, lorsque la manivelle est dans la position angulaire à détecter.
- ledit au moins un capteur est relié à un dispositif de commande du motoréducteur.
- ledit au moins un capteur est relié à un dispositif de commande d'un dispositif de projection de liquide de lavage sur le panneau vitré.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'une partie d'un système d'essuyage selon l'invention ;
- la figure 2 est une vue de dessus du système d'essuyage représenté à la figure 1.

On a représenté aux figures un système d'essuyage 10 pour un panneau vitré de véhicule automobile (non représenté).

Le système d'essuyage 10 comporte notamment un motoréducteur 12, constitué d'un moteur électrique 14 et d'un réducteur 16 transformant le mouvement de rotation continue du moteur 14 en un mouvement de rotation d'un arbre de sortie 18 autour de son axe principal A, l'axe étant orthogonal à l'axe principal B du moteur 14.

Le motoréducteur 12 est fixé à la caisse du véhicule par l'intermédiaire d'une platine de fixation 19.

Ici, le motoréducteur 12 comporte un arbre de sortie 18, pour l'entraînement de balais d'essuyages (non représentés) par l'intermédiaire d'une tringlerie 20.

La tringlerie 20 permet une transformation du mouvement de rotation de l'arbre de sortie 18 en un mouvement de balayage alterné d'au moins un bras (non représenté) d'entraînement du balai d'essuyage associé.

La tringlerie 20 comporte une manivelle 22 dont une extrémité 22a est fixée à une extrémité libre de l'arbre de sortie 18 et dont l'autre extrémité libre 22b de la manivelle 22 est articulée par rapport à une extrémité 24a d'une bielle 24 de la tringlerie 20.

Lors du mouvement de balayage d'un balai sur le panneau vitré, il est parfois utile de connaître la position du balai sur le panneau vitré, pour commander certains composants du système d'essuyage, en fonction de cette position du balai, comme par exemple un dispositif d'aspersion d'un liquide de lavage ou pour commander le motoréducteur.

Pour cela, et conformément à l'invention, le système d'essuyage 10 comporte des capteurs 26 pour détecter le passage d'une manivelle 22 à des positions angulaires prédéfinies autour de l'axe principal A de l'arbre de sortie 18 associé, qui sont portés par le motoréducteur 12, et qui sont reliés à un dispositif électronique de commande de ces composants du système d'essuyage 10.

En effet, la position du balai, ainsi que le sens de déplacement du balai, c'est-à-dire que le balai se rapproche ou s'éloigne d'une position initiale de repos du balai peut être déterminé en fonction de la position de la manivelle 22 autour de l'axe principal A de l'arbre de sortie 18.

Ainsi, en détectant le passage de la manivelle 22 à certaines positions particulières, il est possible de commander un ou plusieurs composants du système d'essuyage 10 en fonction du mouvement de balayage du balai.

Selon un autre aspect de l'invention, les capteurs 26 sont portés par une platine intermédiaire de fixation 28, qui est rapportée sur le motoréducteur 12.

Ainsi, l'ajout des capteurs 26 et de la platine peut être réalisé sans modifier de manière importante le motoréducteur 12, ce qui limite par conséquent les coûts de réalisation du système d'essuyage 10 selon l'invention.

La platine intermédiaire 28 est agencée axialement par rapport à l'axe principal A de l'arbre de sortie 18, entre la tringlerie 20 et le moto réducteur 12, pour ne pas augmenter de manière trop importante l'encombrement global du système d'essuyage 10. La platine intermédiaire 28 est en outre fixée au motoréducteur 12 par tout moyen connu, comme par exemple par vissage ou par collage, elle peut également être supporté par le système d'essuyage 10.

La platine intermédiaire 28 peut être réalisée en matériau composite dans lequel la connectique est surmoulée. De la même manière, les capteurs 26 peuvent également être surmoulés directement dans la platine intermédiaire 28.

Chaque capteur 26 est un capteur de type connu, c'est, par exemple, un capteur de proximité, du type inductif, qui coopère avec un élément métallique (non représenté) de la manivelle 22, qui est réalisé venu de matière avec la manivelle 22, ou bien qui est rapporté sur la manivelle 22.

Chaque capteur 26 est positionné sur la platine intermédiaire 28 pour détecter le passage de la bielle à une position prédéterminée associée au déplacement du balai sur le panneau vitré.

Par exemple la position d'un premier capteur 26 autour de l'axe principal A de l'arbre de sortie 18, ici la position du capteur 26 de gauche en se reportant aux figures, correspond à une position de la manivelle 22 située après une position initiale de repos de la manivelle 22, permettant de détecter le début d'un cycle de balayage du balai.

La position du deuxième capteur 26 autour de l'axe principal A de l'arbre de sortie 18, ici la position du capteur 26 de gauche en se reportant aux figures, correspond à une position intermédiaire de la manivelle 22, associée à une position intermédiaire du balai lors d'un cycle de balayage, par exemple correspondant au point de rebroussement du balai.

Du fait des tolérances dimensionnelles des composants du système d'essuyage 10, l'assemblage du système d'essuyage 10 dans le véhicule comporte une étape d'ajustement de la course des balais, pour que chaque balai essuie une zone prédéfinie du panneau vitré.

Selon un autre aspect de l'invention, les capteurs 26 sont montés sur la platine intermédiaire 28 de manière à permettre un réglage de leur position angulaire autour de l'axe principal A de l'arbre de sortie 18, lors de l'étape d'ajustement.

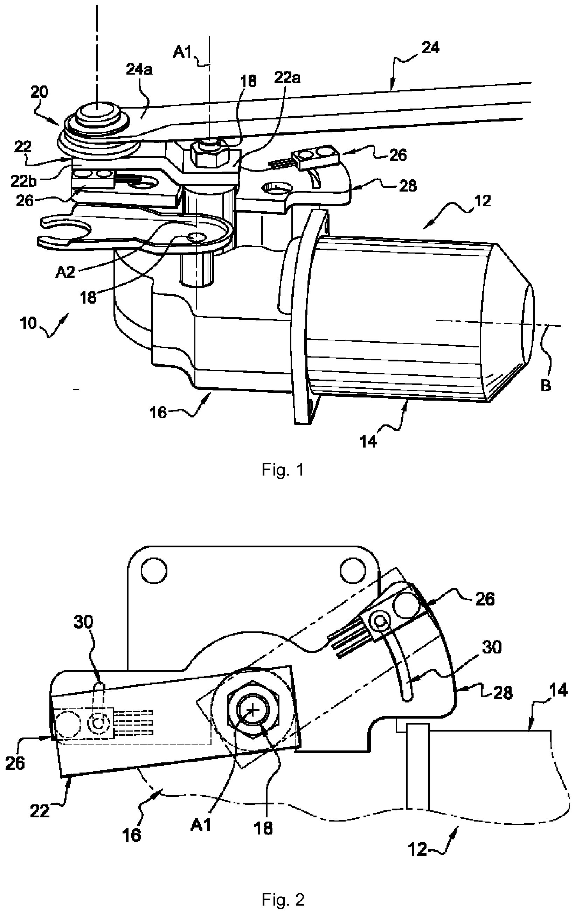

Pour cela, comme on peut le voir plus en détails à la figure 2, chaque capteur 26 est reçu dans une gorge 30 réalisée dans la platine 28, chaque gorge 30 a la forme d'un arc de cercle centré sur l'axe principal A de l'arbre de sortie 18.

Chaque capteur 26 comporte en outre une portion (non représentée) qui est reçue dans la gorge 30 associée, et des moyens pour le verrouillage du capteur 26 en position sur la platine intermédiaire 28, par exemple par vissage.

Le système d'essuyage 10 selon l'invention, qui vient d'être décrit, comporte deux capteurs 26 qui sont montés sur la platine 28.

Il sera compris que l'invention n'est pas limitée à ce mode de réalisation du système d'essuyage 10, et qu'un nombre différent de capteurs 26 peut être monté sur la platine, à des position angulaires prédéterminées.

Par ailleurs, le système d'essuyage qui vient d'être décrit permet la commande d'un dispositif de distribution et de projection de liquide de lavage intégré au système d'essuyage ou extérieur à celui-ci.

## Revendications

1. Système d'essuyage (10) d'un panneau vitré de véhicule automobile qui comporte un motoréducteur (12) d'entraînement de type non electronisé, et une manivelle (22) d'une tringlerie (20) de transformation du mouvement de rotation d'un arbre de sortie (18) du motoréducteur (12) en un mouvement de balayage alterné d'un balai d'essuyage,
**caractérisé en ce que** le système d'essuyage (10) comporte des moyens pour détecter le passage de la manivelle à des positions angulaires prédéfinies autour de l'arbre de sortie (18), qui sont portés par le motoréducteur (12), et qui sont reliés à un dispositif de commande d'au moins un composant du système d'essuyage (10).

2. Système d'essuyage (10) selon la revendication précédente, **caractérisé en ce que** les moyens pour détecter le passage de la manivelle sont reliés à un dispositif de commande d'un dispositif de projection de liquide de lavage sur le panneau vitré.

3. Système d'essuyage (10) selon la revendication 1 ou 2, **caractérisé en ce que** les moyens pour détecter le passage de la manivelle (22) comportent au moins un capteur (26) agencé au niveau d'une position angulaire de la manivelle (22) à détecter.

4. Système d'essuyage (10) selon la revendication précédente, **caractérisé en ce que** ledit au moins un capteur (26) est porté par une platine (28) intermédiaire de montage agencée axialement entre la manivelle (22) et le motoréducteur (12), le long de l'axe principal (A) de l'arbre de sortie (18), qui est rapportée sur le motoréducteur (12).

5. Système d'essuyage (10) selon la revendication précédente, **caractérisé en ce que** ledit au moins un capteur (26) et/ou la platine (28) intermédiaire comporte des moyens de réglage de la position dudit au moins un capteur (26) sur la platine (28) intermédiaire, autour de l'axe principal de l'arbre de sortie (18).

6. Système d'essuyage (10) selon la revendication précédente, **caractérisé en ce que** la platine (28) intermédiaire comporte une gorge (30) en forme d'un arc de cercle centré sur l'axe principal (A) de l'arbre de sortie (18), dans laquelle une partie associée du capteur (26) est reçue, pour permettre le réglage de la position dudit au moins un capteur (26) sur la platine (28) intermédiaire.

7. Système d'essuyage (10) selon l'une quelconque des revendications 3 à 6, **caractérisé en ce que** ledit au moins un capteur (26) est apte à détecter le passage de la manivelle (22) à une position angulaire autour de l'axe principal de l'arbre de sortie (18) correspondant au début d'un cycle de balayage du balai.

8. Système d'essuyage (10) selon la revendication précédente, **caractérisé en ce que** la platine (28) intermédiaire porte au moins un deuxième capteur (26) qui apte à détecter le passage de la manivelle (22) à une position angulaire correspondant à une position angulaire intermédiaire prédéterminée du balai lors de son mouvement de balayage sur le panneau vitré.

9. Système d'essuyage (10) selon l'une quelconque des revendications précédentes, **caractérisé en ce que** la manivelle (22) porte un composant apte à coopérer avec ledit au moins un capteur (26) pour le déclenchement dudit capteur (26), lorsque la bielle (22) est dans la position angulaire à détecter.

10. Système d'essuyage (10) selon l'une quelconque des revendications précédentes, **caractérisé en ce que** ledit au moins un capteur (26) est relié à un dispositif de commande du motoréducteur (12).

## Patentansprüche

1. Wischersystem (10) für eine Glasscheibe eines Automobilfahrzeugs, welches einen Getriebemotor (12) für einen Antrieb vom nicht-elektronisierten Typ und eine Kurbel (22) eines Gestänges (20) für die Umwandlung der Drehbewegung einer Ausgangswelle (18) des Getriebemotors (12) in eine alternierende Wischbewegung eines Wischerblatts umfasst,
**dadurch gekennzeichnet, dass** das Wischersystem (10) Mittel zum Detektieren des Durchgangs der Kurbel durch vordefinierte Winkelpositionen rund um die Ausgangswelle (18) umfasst, die von dem Getriebemotor (12) getragen werden und die mit einer Steuervorrichtung mindestens einer Komponente des Wischersystems (10) verbunden sind.

2. Wischersystem (10) nach dem vorhergehenden Anspruch,
**dadurch gekennzeichnet, dass** die Mittel zum Detektieren des Durchgangs der Kurbel mit einer Steuervorrichtung einer Ausstoßvorrichtung von Waschflüssigkeit auf die Glasscheibe verbunden sind.

3. Wischersystem (10) nach Anspruch 1 oder 2,
**dadurch gekennzeichnet, dass** die Mittel zum Detektieren des Durchgangs der Kurbel (22) mindestens einen Sensor (26) umfassen, der auf der Höhe einer zu detektierenden Winkelposition der Kurbel (22) eingerichtet ist.

4. Wischersystem (10) nach dem vorhergehenden Anspruch,
**dadurch gekennzeichnet, dass** der mindestens eine Sensor (26) von einer Zwischenmontageplatte (28) getragen wird, welche axial zwischen der Kurbel (22) und dem Getriebemotor (12) entlang der Hauptachse (A) der Ausgangswelle (18) eingerichtet ist, die auf dem Getriebemotor (12) angeordnet ist.

5. Wischersystem (10) nach dem vorhergehenden Anspruch,
**dadurch gekennzeichnet, dass** der mindestens eine Sensor (26) und/oder die Zwischenplatte (28) Mittel zum Regeln der Position des mindestens einen Sensors (26) auf der Zwischenplatte (28) rund um die Hauptachse der Ausgangswelle (18) umfassen.

6. Wischersystem (10) nach dem vorhergehenden Anspruch,
**dadurch gekennzeichnet, dass** die Zwischenplatte (28) eine Nut (30) in der Form eines Kreisbogens umfasst, die auf der Hauptachse (A) der Ausgangswelle (18) zentriert ist, in der ein assoziierter Teil des Sensors (26) aufgenommen ist, um die Regelung der Position des mindestens einen Sensors (26) auf der Zwischenplatte (28) zu gestatten.

7. Wischersystem (10) nach einem der Ansprüche 3 bis 6,
**dadurch gekennzeichnet, dass** der mindestens eine Sensor (26) geeignet ist, den Durchgang der Kurbel (22) durch eine Winkelposition rund um die Hauptachse der Ausgangswelle (18) zu detektieren, die dem Beginn eines Wischzyklus des Blatts entspricht.

8. Wischersystem (10) nach dem vorhergehenden Anspruch,
**dadurch gekennzeichnet, dass** die Zwischenplatte (28) mindestens einen zweiten Sensor (26) trägt, der geeignet, den Durchgang der Kurbel (22) durch eine Winkelposition zu detektieren, die einer vorherbestimmten Zwischenwinkelposition des Blatts bei seiner Bewegung zum Wischen der Glasscheibe entspricht.

9. Wischersystem (10) nach einem der vorhergehenden Ansprüche,
**dadurch gekennzeichnet, dass** die Kurbel (22) eine Komponente trägt, die geeignet ist, mit dem mindestens einen Sensor (26) für das Auslösen des Sensors (26) zusammenzuwirken, wenn die Stange (22) in der zu detektierenden Winkelposition ist.

10. Wischersystem (10) nach einem der vorhergehenden Ansprüche,
**dadurch gekennzeichnet, dass** der mindestens eine Sensor (26) mit einer Steuervorrichtung des Getriebemotors (12) verbunden ist.

## Claims

1. Wiper system (10) for wiping a glazed panel of a motor vehicle, which comprises a driving reduction motor (12) of non-electronic type, and a crank (22) of a linkage (20) for converting the rotational movement of an output shaft (18) of the reduction motor (12) into a reciprocating sweeping movement of a wiper blade,
**characterized in that** the wiper system (10) comprises means for detecting the passage of the crank at predefined angular positions about the output shaft (18), which means are borne by the reduction motor (12) and are connected to a device for controlling at least one component of the wiper system (10).

2. Wiper system (10) according to the preceding claim, **characterized in that** the means for detecting the passage of the crank are connected to a device for controlling a device for projecting washing liquid onto the glazed panel.

3. Wiper system (10) according to Claim 1 or 2, **characterized in that** the means for detecting the passage of the crank (22) comprise at least one sensor (26) arranged at an angular position of the crank (22) to be detected.

4. Wiper system (10) according to the preceding claim, **characterized in that** said at least one sensor (26) is borne by an intermediate mounting plate (28) arranged axially between the crank (22) and the reduction motor (12) along the main axis (A) of the output shaft (18), which plate is attached to the reduction motor (12).

5. Wiper system (10) according to the preceding claim, **characterized in that** said at least one sensor (26) and/or the intermediate plate (28) comprises means for adjusting the position of said at least one sensor (26) on the intermediate plate (28) about the main axis of the output shaft (18).

6. Wiper system (10) according to the preceding claim, **characterized in that** the intermediate plate (28) comprises a groove (30) in the form of an arc of a circle centred on the main axis (A) of the output shaft (18), in which groove an associated part of the sensor (26) is received, in order to allow the adjustment of the position of said at least one sensor (26) on the intermediate plate (28).

7. Wiper system (10) according to any one of Claims 3 to 6, **characterized in that** said at least one sensor (26) is able to detect the passage of the crank (22) to an angular position about the main axis of the output shaft (18) corresponding to the start of a sweeping cycle of the blade.

8. Wiper system (10) according to the preceding claim, **characterized in that** the intermediate plate (28) bears at least a second sensor (26) which able to detect the passage of the crank (22) to an angular position corresponding to a predetermined intermediate angular position of the blade during its sweeping movement over the glazed panel.

9. Wiper system (10) according to any one of the preceding claims, **characterized in that** the crank (22) bears a component able to cooperate with said at least one sensor (26) in order to trigger said sensor (26) when the link rod (22) is in the angular position to be detected.

10. Wiper system (10) according to any one of the preceding claims, **characterized in that** said at least one sensor (26) is connected to a device for controlling the reduction motor (12).
